# EUROPEAN PATENT APPLICATION

(11) **EP 1 486 896 A2**
(43) Date of publication of application: **15.12.2004**
(21) Application number: 03026345.3
(22) Date of filing: 18.11.2003
(51) Int. Cl.: G06F 17/60

(54) **Computer system and computer-implemented method for travel management**

(30) Priority: 28.10.2003 EP 03024676; 13.06.2003 US 478481
(71) Applicant: SAP AG, 69190 Walldorf (DE)
(72) Inventor: Wind, Oliver, 67373 Dudenhofen (DE); Roth, Simone, 69124 Heidelberg (DE); Berger Matthias, 69168 Wiesloch (DE); Bombolowksy, Jens, 68723 Schwetzingen (DE)
(74) Representative: Luderschmidt, Schüler & Partner

(57) **Abstract**

The present invention refers to a computer system and computer-implemented method for managing travel arrangements. The computer-system comprises storage means (112) for storing travel arrangement data associated with travel arrangements (for example, Travel plans and Travel Expense Reports), processing means (111) for processing the travel arrangement data to carry out predetermined actions (for example, Change Travel Plan, Create Travel Plan, Create Travel Expense Report, Change Travel Expense Report) associated with the travel arrangements, input means (114 ) for selecting predetermined actions to be carried out by the processing means, and output means (115) for presenting travel information associated with the travel arrangement data. The travel arrangement data include data associated with, for example, start and end of business trip, destination of trip, reason for trip, etc., and deadline data associated to predetermined deadlines related to the travel arrangements. The processing means (111) further comprises means for checking whether predetermined actions have been selected to be carried out within a predetermined period of time before the predetermined deadlines, and the output means further comprises means for presenting as an alert that a predetermined action or a plurality of predetermined actions have not been selected within the predetermined period of time. The present invention facilitates travel management as well as helps to prevent missing critical deadlines.

## Description

### Field of the Invention

The present invention generally relates to electronic data processing. In particular, the invention refers to a computer system and computer-implemented method for management of travel arrangements, such as planning business travels, booking travels and settlement of travel-expenses, and a computer program product and data carrier. The processes of planning travels, booking travels and settlement of travel-expenses are hereinafter designated as travel arrangements.

### Background of the Invention

In a global business environment, travel is a necessary and expensive fact of life. Travel managers in companies are pushing for more transparency and new strategies for managing, controlling, and minimizing the increasing costs related to business travels.

Prior art travel management systems include the processes of planning travels, booking travels, and settlement of travel-expenses. A prior art system for travel management is, for example, the SAP Travel Management System (SAP©) performing all the processes involved with business travels.

Most major credit card providers are certified for interface with the SAP Travel Management System. The automated payment system of the providers allows the integration of transaction data relating to invoices paid with corporate credit cards or travel center/ghost cards. The transaction data are imported into the SAP system using accounting files supplied by the credit card providers. The transaction data are arranged to provide travel-expense data for creating travel-expense receipts, i.e. information such as type, date, and amount of receipts. The travel-expense data are stored for each payment.

The automated payment system of the credit card providers and the SAP system are interconnected with a network, for example intranet or internet (world wide web) allowing the rapid and simple transfer of the transaction data.

The prior art travel management systems are systems for efficient planning and booking of travels as well as settlement of travel-expenses, however, the efficiency of travel management depends on the user's discipline to carry out the corresponding actions.

### Summary of the Invention

It is an object of the present invention to provide a computer system allowing the user an efficient management of travel arrangements.

A further object of the invention is to provide a computer-implemented method allowing efficient management of travel arrangements as well as a computer program product and data carrier for efficient management of travel arrangements.

In accordance with the purpose of the invention as embodied and broadly described herein, the computer system for management of travel arrangements is based on electronic data processing means. The computer system comprises storage means for storing travel arrangement data, e.g. start and end of business trip, destination, country, reason for trip, etc., which are associated with travel arrangements, e.g. travel plans, travel-expense reports. The travel arrangement data include deadline data associated with predetermined deadlines related to the travel arrangements. The system further comprises processing means for processing the travel arrangement data to carry out predetermined actions associated with the travel arrangements, e.g. creating travel plans, changing travel plans, creating and changing travel-expense reports. Furthermore, input means are provided for selecting predetermined actions to be carried out by the processing means, and output means are provided for presenting travel information associated with the travel arrangement data.

According to the present invention, the processing means comprises means for checking whether predetermined actions have been selected to be carried out within a predetermined period of time before the predetermined deadline, and the output means comprises means for presenting as an alert that a predetermined action or a plurality of predetermined actions have not been selected within the predetermined period of time.

If a predetermined action or a plurality of predetermined actions have not been selected within the predetermined period of time, e.g. a certain action associated to travel plans, such as create, change, delete, or approve travel plans, the alert means will request the user (traveler) to carry out the predetermined action(s). Therefore, the alert means helps to prevent missing critical deadlines and improves the efficiency of travel management. The alert means may automatically provide a link, such as an URL, to the corresponding application by which the user can carry out the missing action. The alerts may be specific for the single user and only the actions related to the user's travel management data may be presented.

In another aspect of the invention, the processing means further comprises means for determining the period of time between the actual date and the deadline associated with the non-selected action to be carried out; and the output means further comprises means for presenting the period of time between the actual date and the deadline associated with the non-selected action. Therefore, the user is informed not only about a predetermined action which has to be carried out, but also the period of time in which the action has to be carried out.

In yet another aspect of the invention, the processing means comprises means for checking whether the non-selected actions have been selected to be carried out after lapse of predetermined deadlines, and the output means comprises means for presenting that a predetermined action or a plurality of predetermined actions have not been selected after lapse of the predetermined deadline. Therefore, the user is informed about the status even if the traveler has not carried out the predetermined action.

In yet another aspect of the invention, the input means further comprising means for inputting the predetermined period of time related to predetermined actions to be carried out allows the administrator or user the individual adaptation of the system.

The present invention further provides a computer-implemented method as well as computer program product and data carrier allowing efficient management of travel arrangements.

These and other features, objects, and advantages of the preferred embodiments will become apparent when the detailed description of the preferred embodiments is read in conjunction with the drawings.

### Brief Description of the Drawings

- Fig. 1: is a simplified block diagram illustrating the computer system for travel management according to the invention;
- Fig. 2: is a simplified flow chart illustrating the method steps according to the invention;
- Fig. 3: illustrates, as an example, the arrangement of travel arrangement data; and
- Fig. 4: illustrates, as an example, the output means of the computer system.

Reference will now be made in detail to the present invention, examples of which are illustrated in the accompanying drawings in which like reference numbers refer to corresponding elements as well as the appendix.

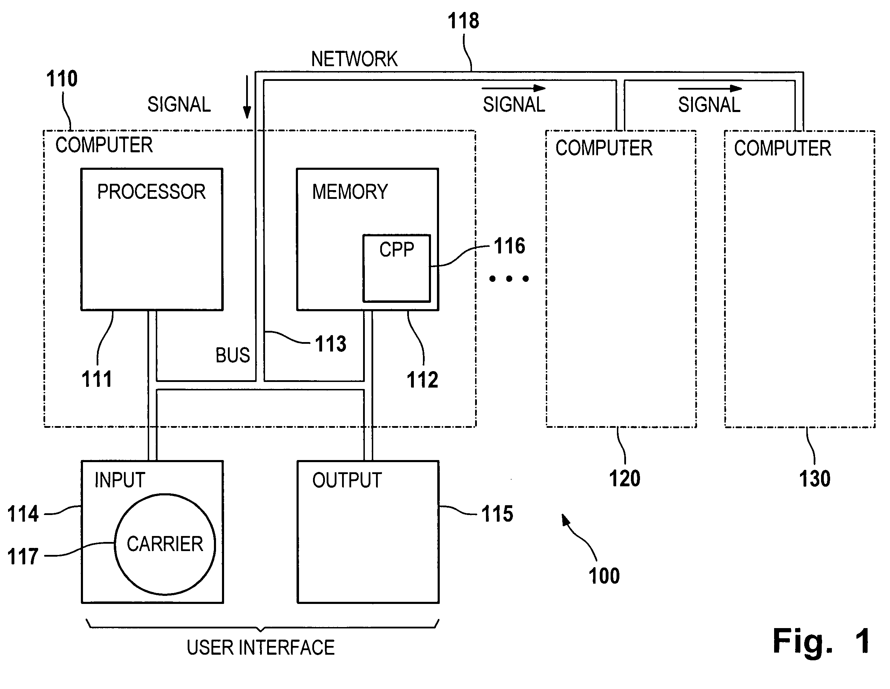

The computer system 100 comprises a single computer or a plurality (n) of computers 110, 120, 130 coupled via inter-computer network 118 (Fig. 1). Each Computer comprises data processing means 111 (processor), storage means 112 (memory), bus means 113 (bus), input means 114 and output means 115 (input and output devices). The computer system may also be simply a server.

The Computer is, for example, a conventional Personal Computer (PC). The Processor is, for example, a Central Processing Unit (CPU), a Micro Controller Unit (MCU), Digital Signal Processor (DSP), etc.

The storage means 112 is, in particular, provided for storing travel arrangement data. Storage means symbolizes any memory means for temporarily or permanently storing data and instructions. Although memory is conveniently illustrated as part of computer, memory function may also be implemented in network, computer and processor itself, e.g. cache, register, or elsewhere. Memory is, for example, a Read Only Memory (ROM), Random Access Memory (RAM). Memory can be physically implemented by computer-readable media, for example: (a) magnetic media, such as hard disk, floppy disk or other magnetic disk, tape or cassette tape; (b) optical media, such as optical disk (CD-ROM, DVD); (c) semiconductor media, like DRAM, SRAM, EPROM.

The storage means 112 may further store support modules, for example, a Basic Input Output System (BIOS), Operating System (OS), program library, compiler or interpreter. For simplicity, these modules are not illustrated.

The output means 115 for presenting travel information symbolizes any device presenting data that have been processed, for example, a monitor or a display, for example, a Cathode Ray Tube (CRT), Flat Panel Display, Liquid Crystal Display (LCD), a printer, plotter or speaker.

The input means 114 for selecting predetermined actions to be carried out symbolizes any device for providing data and instructions for processing by computer, for example, a keyboard or pointing device such as a mouse, trackball or cursor direction key.

To achieve the forgoing object, a Computer Program Product (CPP) 116 and a data carrier 117 are provided. CPP and data carrier are, hereinafter, designated as program. CPP comprises program instructions and, optionally, data that cause the processor to execute the method steps according to the present invention. In other words, CPP defines the operation of computer and its interaction in inter-computer network. For example, CPP may be available as source code in any programming language, and as object code (binary code) in a compiled form. Persons skilled in the art can use CPP in connection with any of the support modules (e.g. compiler, interpreter). The method steps according to the present invention are explained with more detail below.

The data carrier 117 is illustrated outside the computer. For the communication of CPP and computer, data carrier is conveniently inserted into input means 117. Data carrier is implemented as any computer readable medium. Generally, carrier is an article of manufacture comprising a computer readable medium having readable program code means embodied therein for executing the method steps of the present invention. Furthermore, program signals can also embody computer program. Program signals are transmitted via inter-computer network.

Computer bus 113 and inter-computer network 118 provide logical and physical connections by conveying data and instruction signals. While connections inside computer are conveniently referred as bus, connections between computers are referred as inter-computer network.

The Network 118 is, for example, a Local Area Network (LAN), a Wide Area Network (WAN), intranet or internet, i.e. world wide web, or any other networking environments, e.g. a Public Switched Telephone Network (PSTN), an Integrated Services Digital Network (ISDN), and an Universal Mobile Telecommunications System (UMTS).

Network also comprises hard or software protocol translation devices that allows the user working in one network to access another network (gateway).
Transmission protocols and data formats are known as, for example, Transmission Control Protocol/Internet Protocol (TCP/IP), Hyper Text Transfer Protocol (HTTP), Unique Resource Locator (URL), etc.

Computer and program are closely related. As used hereinafter, phrases such as "computer provides" and "program provides" are convenient abbreviations to express actions by the computer that is controlled by the program. While the signals inside the computer are mostly electrical signals, the signals in network are electrical, magnetic, optical or radio signals.

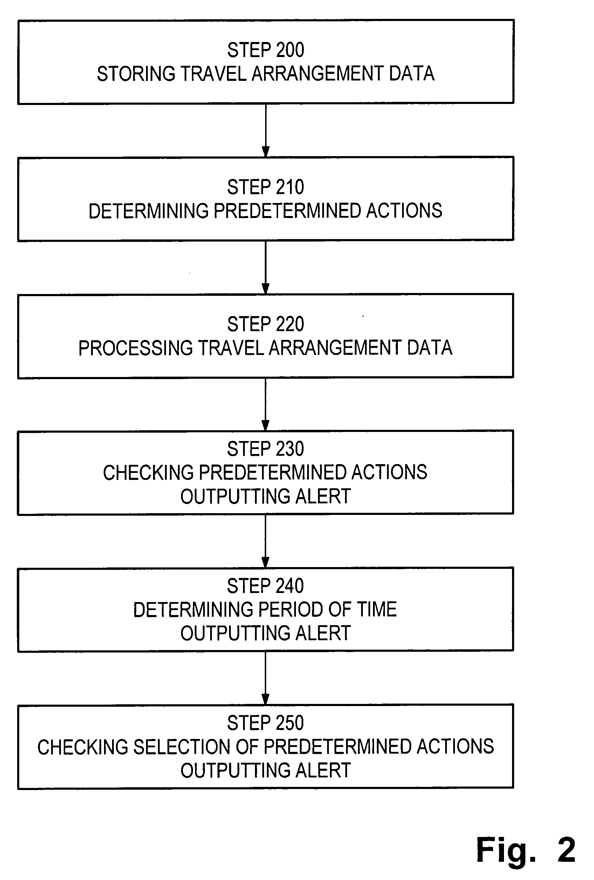

The system and the method steps according to the invention are now explained in detail (Fig. 2).

In method step 200, the computer provides the storage means 112 to store travel arrangement data associated with travel arrangements. Travel arrangement data include data concerning the planning of business travels, booking of travels, and settlement of travel-expenses, such as start and end of business trip, destination, reason for trip, etc. These data may be inputted by the user or administrator of the computer system, automatically created or received from a provider.

In particular, the travel arrangement data include deadline data associated with predetermined deadlines in which predetermined actions have to be carried out. The travel arrangement data may further include, for example, transaction data of automated payment systems of credit card providers, e.g. type, date, and amount of payment.

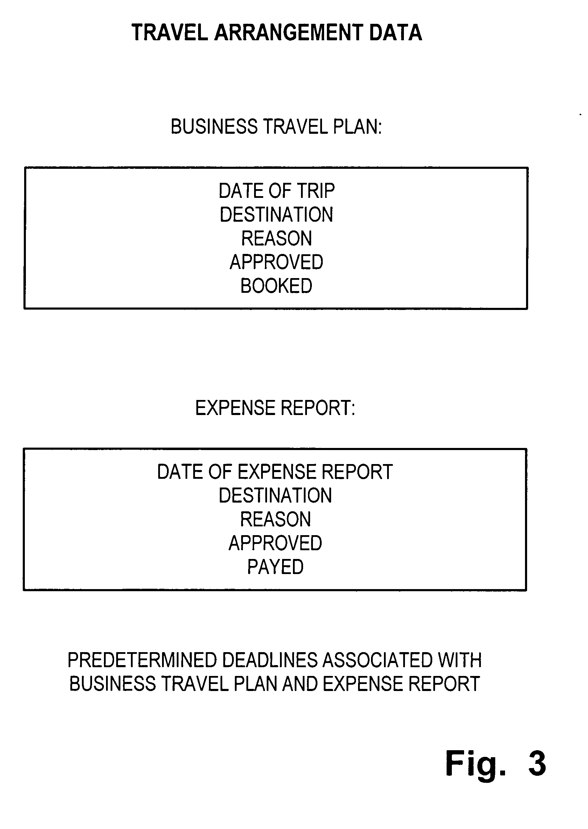

Fig. 3 illustrates, as an example, the arrangement of the travel arrangement data. The travel arrangement data include data associated with a business travel plan and an expense report, e.g. Date of trip: (09/03/03-09/05/03), Destination: Denver, Reason: Costumer Visit, Approved: OK, Booked: " "; Date of expense- report: (06/15/03), Destination: Orlando, Reason: Sapphire, Approved " ", Payed " " The travel arrangement data further include deadline data, i.e. start of trip: (09/03/03), end of trip. (09/05/03) as well as data associated with a predetermined period of time: 10 days.

In method step 210, the computer provides the processing means 111 to determine whether a predetermined action or a plurality of predetermined actions have been selected by the input means 114 to be carried out, e.g. Change Travel Plan, Book Travel Plan, Create and Change Expense Report.

In method step 220, the computer provides the processing means 111 to process the travel arrangement data to carry out the predetermined actions which have been selected.

In method step 230, the computer provides the processing means 111 to check whether predetermined actions have been carried out within the predetermined period of time before the predetermined deadline related to the corresponding actions, which have been stored in the storage means 112. If a predetermined action or a plurality of predetermined actions have not been carried out within the predetermined period of time, the program will provide the output means 115 to present the user as an alert that a predetermined action or a plurality of predetermined actions have not been carried out.

In method step 240, the computer further provides the processing means 111 to determine the period of time between the actual date and the deadline(s) associated with the action(s) which have not been carried out within the predetermined period of time. The program further provides the output means 115 to present the user the period of time between the actual date and the deadline associated with the non-carried out action(s), i.e. the period of time in which the user has to select the action(s).

For example, the computer provides the processing means to check whether the travel plan has been booked within a predetermined period of time, e.g. 10 days before the start of business trip, e.g. (09/03/03). If the travel plan has not been booked, the program will further provide the processing means to determine the period of time between the actual date and the start of the trip, e.g. 6 days. The computer provides the output means 115 to display the user the following alert: Trip starts in 6 days. There is provided a link (URL), e.g. Book Travel Plan, within the travelers homepage that takes the traveler into the corresponding application for this particular trip, e.g. to plan and confirm a flight.

In method step 250, the computer provides the processing means to check whether predetermined actions have been selected to be carried out after lapse of the deadline of the corresponding action. If a predetermined action or a plurality of predetermined actions have not been selected to be carried out, the program will provide the output means 115 to present the user as an alert that a predetermined action or a plurality of predetermined actions have not been carried out.

For example, the computer provides the processing means to check whether an expense-report has been created after the end of the trip. If not, the output means 115 will display the following alert within the travelers homepage: Create Expense Report. Therefore, the traveler is informed that travel-expenses have to be claimed before a certain deadline because afterwards no more travel-expense reports will be accepted. There is provided a link (URL) offered on the traveler's homepage that leads the traveler into the corresponding application for this particular Expense Report.

The computer-implemented method for management of travel arrangements according to the present invention comprises the method steps of 200 to 250.

The present invention does not refer to a computer-system and computer-implemented method for management of travel arrangements only, but also to a computer program product CPP that can be stored on a computer readable data carrier, and the data carrier. The computer program product for management of travel arrangements comprises a plurality of instructions for causing the processing means 111 of the computer the method steps of 200 to 250.

Fig. 4 illustrates the output means 115 (Startpage) of the computer system. The user has to click on Create (left top - first link) to enter General data (Startdate, Enddate, Destination). The computer provides the processing means to check whether the travel plan has been booked within 10 days before the start of business trip, e.g. (09/03/03). Since the travel plan had not been booked in the present example, the program provides the processing means to determine the period of time between the actual date and the start of the trip, e.g. 6 days. The computer provides the output means 115 to display the user the following alert: Trip starts in 6 days. There is provided a link (URL), Book Travel Plan, within the travelers homepage that takes the traveler into the corresponding application for this particular trip, e.g. to plan and confirm a flight.

Reference Description
- 100: Computer system
- 110 to 130: Computer
- 111: Processing means (Processor)
- 112: Storage means (Memory)
- 113: Bus
- 114: Input means
- 115: Output means
- 116: Computer Program Product CPP
- 117: Data carrier
- 118: Inter-computer network

- 200 - 250: Method steps

## Claims

1. A computer system for management of travel arrangements, the system comprising:
storage means (112) for storing travel arrangement data associated with travel arrangements, the travel arrangement data including deadline data associated with predetermined deadlines related to the travel arrangements;
processing means (111) for processing the travel arrangement data to carry out predetermined actions associated with the travel arrangements;
input means (114) for selecting predetermined actions to be carried out by the processing means;
output means (115) for presenting travel information associated with the travel arrangement data; wherein
the processing means (111) comprises means for checking whether predetermined actions have been selected to be carried out within a predetermined period of time before the predetermined deadline related to the predetermined action;
the output means (115) comprises means for presenting as an alert that a predetermined action or a plurality of predetermined actions have not been selected to be carried out within the predetermined period of time.

2. A computer system of claim 1, wherein
the processing means (111) further comprises means for determining the period of time between the actual date and the deadline associated with the non-selected action to be carried out; and
the output means (115) further comprises means for presenting the period of time between the actual date and the deadline associated with the non-selected action to be carried out.

3. A computer system of claim 1 or 2, wherein
the processing means (111) comprises means for checking whether predetermined actions have been selected to be carried out after lapse of predetermined deadlines; and
the output means (115) comprises means for presenting that a predetermined action or a plurality of predetermined actions have not been selected to be carried out after lapse of the predetermined deadline.

4. A computer system of one of claims 1 to 3, wherein the travel arrangement data are arranged to provide data associated with at least one of start of business travel, end of business travel, destination of business travel, reason for business travel.

5. A computer system of one of claims 1 to 4, wherein the input means (114) further comprises means for inputting a predetermined period of time related to predetermined actions to be carried out.

6. A computer-implemented method for managing travel planning, the method comprising the following steps:
inputting travel arrangement data associated with travel arrangements, the travel arrangement data including deadline data associated with predetermined deadlines related to the travel arrangements;
storing the travel arrangement data;
processing the travel arrangement data to carry out predetermined actions associated with the travel arrangements;
determining whether predetermined actions have been selected to be carried out; and
presenting travel information associated with the travel arrangement data;
wherein,
the step of processing travel arrangement data comprises the step of checking whether predetermined actions have been selected to be carried out within a predetermined period of time before the predetermined deadline related to the predetermined action; and
the step of presenting travel information comprising the step of presenting as an alert that a predetermined action or a plurality of predetermined actions have not been selected to be carried out within the predetermined period of time.

7. A computer-implemented method of claim 6, wherein
the step of processing travel arrangement data comprises the further step of determining the period of time between the actual date and the deadlines associated with the non-selected actions to be carried out; and
the step of presenting travel information comprises the further step of presenting the period of time between the actual date and the deadline associated with the non-selected actions to be carried out.

8. A computer-implemented method of claim 6 or 7, wherein
the step of processing travel arrangement data further comprises the step of checking whether predetermined actions have been selected to be carried out after lapse of predetermined deadlines; and
the step of presenting travel information comprises the further step of presenting that a predetermined action or a plurality of predetermined actions have not been selected to be carried out after lapse of the predetermined deadline.

9. A computer-implemented method of one of claims 6 to 8, wherein the travel arrangement data are arranged to provide data associated with at least one of start of a business travel, end of a business travel, destination of a business travel, reason for a business travel.

10. A computer-implemented method of one of claims 6 to 9, wherein the step of inputting travel arrangement data comprises the further step of inputting a predetermined period of time related to predetermined actions to be carried out.

11. A computer program product (CCP) having a plurality of instructions for causing processing means of a computer system to execute the following steps:
inputting travel arrangement data associated with travel arrangements, the travel arrangement data including deadline data associated with predetermined deadlines related to the travel arrangements;
storing the travel arrangement data;
processing the travel arrangement data to carry out predetermined actions associated with the travel arrangements;
determining whether predetermined actions have been selected to be carried out; and
presenting travel information associated with the travel arrangement data;
wherein,
the step of processing travel arrangement data comprises the step of checking whether predetermined actions have been selected to be carried out within a predetermined period of time before the predetermined deadline related to the predetermined action; and
the step of presenting travel information comprising the step of presenting as an alert that a predetermined action or a plurality of predetermined actions have not been selected to be carried out within the predetermined period of time.

12. A computer program product (CCP) of claim 11, wherein
the step of processing travel arrangement data comprises the further step of determining the period of time between the actual date and the deadline associated with the non-selected actions to be carried out; and
the step of presenting travel information comprises the further step of presenting the period of time between the actual date and the deadline associated with the non-selected actions to be carried out.

13. A computer program product (CCP) of claim 11 or 12, wherein
the step of processing travel arrangement data further comprises the step of checking whether predetermined actions have been selected to be carried out after lapse of the predetermined deadline; and
the step of presenting travel information comprises the further step of presenting that a predetermined action or a plurality of predetermined actions have not been selected to be carried out after lapse of the predetermined deadline.

14. A computer program product (CCP) of one of claims 11 to 13, wherein the travel arrangement data are arranged to provide data associated with at least one of start of a business travel, end of a business travel, destination of a business travel, reason for a business travel.

15. A computer program product (CCP) of one of claims 11 to 14, wherein the step of inputting travel arrangement data comprises the further step of inputting a predetermined period of time related to predetermined actions to be carried out.

16. A data carrier readable by a computer, the data carrier () storing a plurality of instructions for causing a processing means of a computer system to execute the method of one of claims 6 to 10.
